# EUROPÄISCHE PATENTSCHRIFT

(11) **EP 0 958 109 B1**
(45) Veröffentlichungstag und Bekanntmachung des Hinweises auf die Patenterteilung: **23.10.2002**
(21) Anmeldenummer: 98908012.2
(22) Anmeldetag: 29.01.1998
(51) Int. Cl.: B25J 15/02

(54) **GREIFVORRICHTUNG**
GRIPPING DEVICE
DISPOSITIF DE PREHENSION

(30) Priorität: 06.02.1997 DE 19704444
(43) Veröffentlichungstag der Anmeldung: 24.11.1999
(73) Patentinhaber: Schunk GmbH & Co. KG Fabrik für Spann- und Greifwerkzeuge, 74348 Lauffen (DE)
(72) Erfinder: SCHNEIDER, Michael, D-74360 Ilsfeld (DE)
(74) Vertreter: Friz, Oliver
(86) Internationale Anmeldenummer: EP9800478
(87) Internationale Veröffentlichungsnummer: WO98034763

(56) Entgegenhaltungen:
- DE-A- 4 320 071
- DE-U- 8 513 467
- US-A- 4 593 948

## Beschreibung

Die Erfindung betrifft eine Greifvorrichtung für die Handhabung von Gegenständen, mit einem Gehäuse und wenigstens zwei gesteuert aufeinander zu- und voneinander wegbewegbaren Grundbacken, die über einen in Verschieberichtung erstreckten Führungsabschnitt in einer komplementär hierzu ausgebildeten Gehäuseausnehmung geführt sind und die Greiferfinger bilden oder an denen die Greiferfinger befestigbar sind. Eine derartige Greifvorrichtung ist aus der DE-U-85 13 467 bekannt.

Eine derartige Greifvorrichtung ist vielfach bekannt; üblicherweise weist das Gehäuse eine T-förmige Ausnehmung auf, so dass der Führungsabschnitt einen Gehäuseabschnitt hintergreift und in Verschieberichtung selbst im Wesentlichen T-förmig ausgebildet ist. Demgemäß ist die Führungslänge, d.h. die Länge des Führungsabschnitts jeder Grundbacke durch die gegenüberliegende Grundbacke begrenzt, da beide in der gleichen Gehäuseausnehmung geführt sind.

Der vorliegenden Erfindung liegt die Aufgabe zugrunde, eine Greifvorrichtung der eingangs beschriebenen Art dahingehend zu verbessern, dass die im Betrieb auftretende Flächenpressung zwischen den gegeneinander bewegten Bauteilen verringert wird, wobei jedoch eine den Anforderungen genügende Spielfreiheit beibehalten wird.

Diese Aufgabe wird bei einer Greifvorrichtung der genannten Art erfindungsgemäß dadurch gelöst, dass ein Führungsabschnitt wenigstens einer der Grundbacken eine Führung für einen Eingriffsabschnitt der anderen Grundbacke bildet.

Vorzugsweise weisen beide Grundbacken jeweils einen Führungsabschnitt und einen Eingriffsabschnitt auf, die mit dem Eingriffsabschnitt bzw. dem Führungsabschnitt der anderen Grundbacke in der erwähnten Weise zusammenwirken. Hierdurch kann erfindungsgemäß eine größere Führungslänge und demgemäß eine geringere Flächenpressung beim Betrieb der Greifvorrichtung erreicht werden. Die größere Führungslänge ergibt sich daraus, dass die Erstreckung des im Gehäuse insbesondere gleitgeführten Führungsabschnitts einen Grundbasiskörper der Grundbacke in Verschieberichtung überragen kann, ohne dass hiermit eine Reduzierung der Führungslänge der anderen Grundbacke verbunden wäre, da diese ja mit ihrem Eingriffsabschnitt in den Führungsabschnitt der zuerst erwähnten Grundbacke eingreifen kann.

Im Hinblick auf eine kostengünstige Fertigung erweist es sich als vorteilhaft, wenn die gegeneinander verschiebbaren Grundbacken identisch ausgebildet sind und unter Zusammenwirken von Führungsabschnitt bzw. Eingriffsabschnitt zweier Grundbacken ineinanderschiebbar sind.

Eine Grundbacke umfasst ein als Grundbackenbasiskörper zu bezeichnendes Bauteil, welches mit quer zur Verschieberichtung vorstehenden Greiferfingern ausgebildet ist oder Halteeinrichtungen für solche Greiferfinger umfasst. Nach einer vorteilhaften Ausführungsform der Erfindung ist der Führungsabschnitt und der Eingriffsabschnitt an dem Grundbackenbasiskörper in Verschieberichtung seitlich vorgesehen. Hierdurch kann in vorteilhafter Weise eine übliche T-förmige Gehäuseführung verwendet werden.

Der Führungsabschnitt bzw. der Eingriffsabschnitt jeder Grundbacke können desweiteren den Grundbackenbasiskörper der anderen Grundbacke in Verschieberichtung seitlich umgreifen. Hierdurch kann eine maximale Führungslänge erreicht werden, und es besteht die Möglichkeit, in der Mitte zwischen Führungsabschnitt und Eingriffsabschnitt einer jeweiligen Grundbacke einen Stellmechanismus für die Grundbacken, insbesondere in Form eines ineinandergreifende Auflaufschrägen aufweisenden Keilhakens, der quer zur Verschieberichtung der Grundbacken bewegbar ist, vorzusehen.

Nach einer bevorzugten Ausführungsform liegen der Führungsabschnitt und der Eingriffsabschnitt einer Grundbacke einander quer zur Verschieberichtung gegenüber und sind daher beide am Grundbackenbasiskörper der jeweiligen Grundbacke seitlich vorgesehen.

Die jeweils zusammenwirkenden Führungs- und Eingriffsabschnitte können in ansich beliebiger zueinander komplementärer Form ausgebildet sein, wobei zur weiteren Reduzierung der auftretenden Reibungskräfte zwischen Führungsund Eingriffsabschnitt wirkende Wälzkörper bzw. Wälzlagereinrichtungen vorgesehen sein können, etwa ein in Verschieberichtung erstrecktes Nadelband.

Nach einer vorteilhaften Ausführungsform der Erfindung weist der Führungsabschnitt einer Grundbacke eine in Verschieberichtung erstreckte nach innen offene nutförmige Ausnehmung auf, die an ihrer vom Grundbackenbasiskörper abgewandten der anderen Führungsbacke zugewandten Stirnseite in Verschieberichtung mündet und den Eingriffsabschnitt der anderen Grundbacke aufnimmt.

Die Nut kann wiederum eine ansich beliebige Form aufweisen. Sie umfasst vorteilhafterweise eine beim Gebrauch im Wesentlichen horizontale Führungsfläche (Nutboden oder Nutflanke) auf, über welche die einwirkenden Kräfte, insbesondere Gewichtskräfte, flächenhaft verteilt auf das Gehäuse übertragen werden können.

Nach einem weiteren vorteilhaften Gedanken umfasst der Führungsabschnitt im Bereich des Grundbackenbasiskörpers eine in Umfangsrichtung geschlossene Öffnung, die von der nutförmigen Ausnehmung gebildet und vom Grundbackenbasiskörper begrenzt ist. Diese Öffnung wird vom Eingriffsabschnitt der anderen Grundbacke durchgriffen, was die Führungseigenschaften und die Lagedefinition der Grundbacken zueinander wenigstens in der Schließstellung der Grundbacken weiter verbessert.

Im Hinblick auf eine kostengünstige Fertigung der erfindungsgemäßen Grundbacken wird die Fertigung aus Kunststoff, vorzugsweise im Spritzgußverfahren, als vorteilhaft angesehen, da eine aufwendige spanabhebende Bearbeitung entfallen kann. Bei kleineren Stückzahlen hingegen dürfte sich eine Fertigung aus Metall, insbesondere im Drahterudiersverfahren, bewähren.

Weitere Merkmale, Vorteile und Einzelheiten der Erfindung ergeben sich aus den beigefügten Ansprüchen und der zeichnerischen Darstellung und nachfolgenden Beschreibung einer vorteilhaften Ausführungsform der Erfindung. In der Zeichnung zeigt:
- Figur 1: eine perspektivische Ansicht einer erfindungsgemäßen Greifvorrichtung;
- Figur 2: perspektivische Ansichten zweier gegeneinander verschiebbarer Grundbacken und
- Figur 3: eine perspektivische Ansicht zweier Grundbacken mit einer Stellvorrichtung in Form eines Keilhakens.

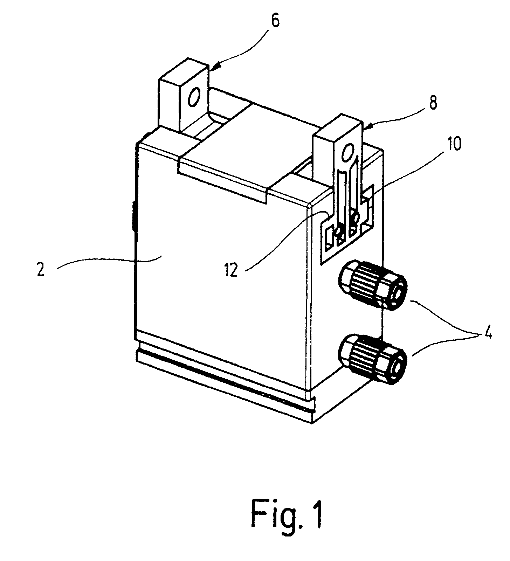

Figur 1 zeigt eine erfindungsgemäß ausgebildete Greifvorrichtung mit einem Gehäuse 2 mit Druckluftanschlüssen 4 und zwei aufeinander zu- und voneinander wegbewegbaren Grundbacken 6, 8. Die Grundbacken 6, 8 sind in einer im Querschnitt T-förmigen Ausnehmung 10 in dem Gehäuse 2 geführt. Hierfür ist ein Führungsabschnitt 12, 13 einer jeweiligen Grundbacke 6, 8 komplementär zu dem hintergreifbaren Gehäuseabschnitt im Bereich der Ausnehmung 10 ausgebildet. An ihrem vom Gehäuse 2 quer zur Verschieberichtung vorstehenden Abschnitt der Grundbacken 6, 8 sind nicht dargestellte Greiferfinger beliebiger Form montierbar.

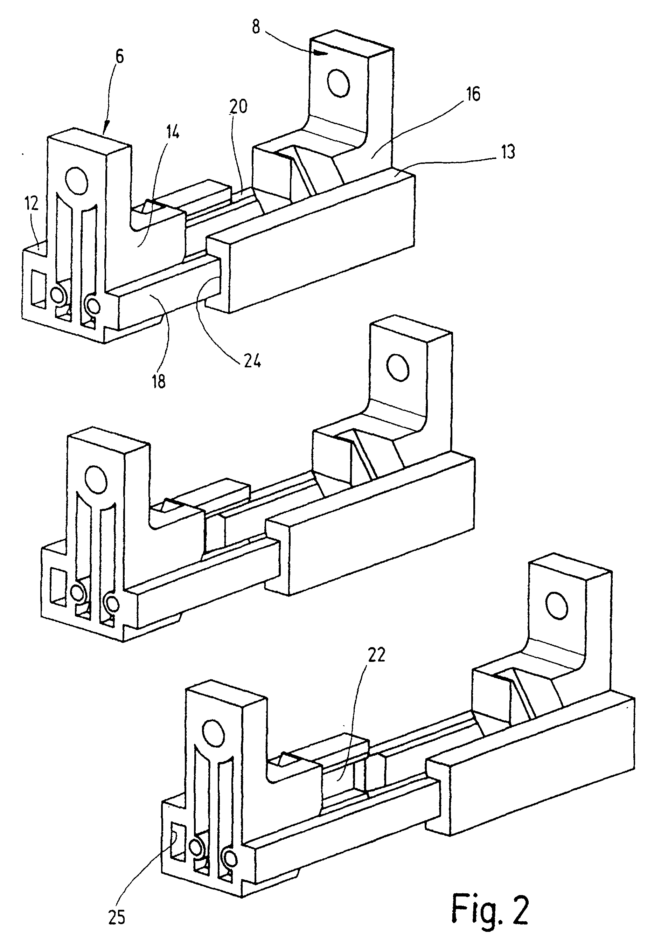

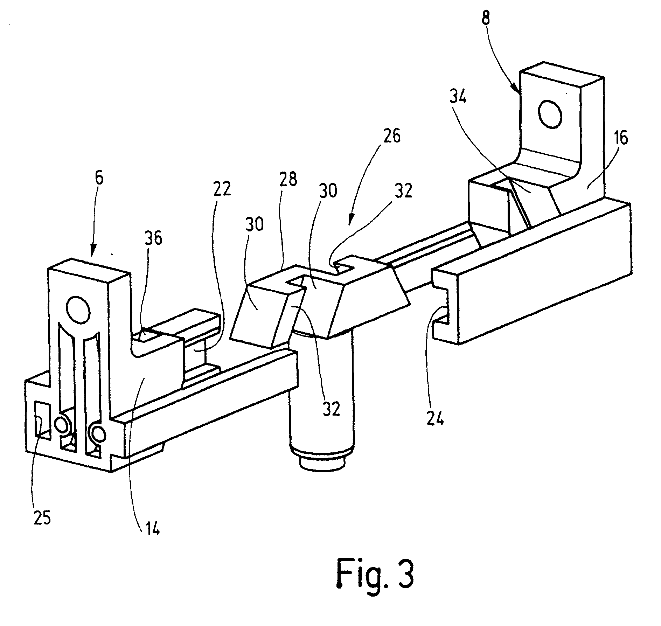

Die Figuren 2 und 3 zeigen perspektivische Ansichten der Grundbacken 6, 8. Diese umfassen jeweils einen Grundbackenbasiskörper 14, 16. In Verschieberichtung seitlich am jeweiligen Grundbackenbasiskörper 14, 16 sind die zuvor bereits erwähnten Führungsabschnitte 12, 13 einstückig angeformt. Auf der jeweils quer zur Verschieberichtung gegenüberliegenden Seite eines jeweiligen Grundbackenbasiskörpers 14, 16 ist ein Eingriffsabschnitt 18, 20 ebenfalls einstückig angeformt. Die Eingriffsabschnitte 18, 20 sind als im Querschnitt rechteckförmige Stege ausgebildet und überragen den jeweiligen Grundbackenbasiskörper 14, 16 in Richtung auf die gegenüberliegende Grundbäcke 8, 6. Die Führungsabschnitte 12, 13 weisen eine in Verschieberichtung erstreckte nach innen offene Nut 22, 24 auf, die im Querschnitt komplementär zur Form der Eingriffsabschnitte 18, 20 ausgebildet ist. Die Grundbacken 6, 8 sind als Bauteile identisch ausgebildet und lassen sich - wie dies in den Figuren 2 und 3 dargestellt ist - derart aufeinander zu- und ineinander bewegen, dass der Eingriffsabschnitt 18, 20 der einen Grundbacke 6, 8 in die nutförmige Ausnehmung 24, 22 der anderen Grundbacke 8, 6 einführbar ist.

Die Führungsabschnitte 12, 13 der Führungsbacken 6, 8 bilden also eine Führung für die Eingriffsabschnitte 20, 18 der jeweils anderen Grundbacke 8, 6. Beide Grundbacken 6, 8 umgreifen einander seitlich mit ihren Führungs- und Eingriffsabschnitten 12, 13; 18, 20.

Im Bereich eines jeweiligen Grundbackenbasiskörpers 14, 16 begrenzen der Führungsabschnitt 12, 13 und der Basiskörper eine in Umfangsrichtung geschlossene Öffnung 25, die im zusammengefahrenen Zustand der Grundbacken 6, 8 von dem Eingriffsabschnitt 18, 20 der anderen Grundbacke 8, 6 durchgriffen wird.

Wie aus Figur 3 ersichtlich ist als Stellmechanismus 26 zum gesteuerten Aufeinanderzu- bzw. Voneinanderwegbewegen der Grundbacken 6, 8 und der daran montierbaren Greiferfinger ein quer zur Verschieberichtung pneumatisch gesteuerter Keilhaken 28 vorgesehen. Der Keilhaken 28 weist in ansich bekannter Weise schräg zur Verstellrichtung des Keilhakens und zur Verschieberichtung der Grundbacken 6, 8 verlaufende Auflaufschrägen 30, 32 auf, welche mit entsprechenden Auflaufschrägen 34, 36 an den Grundbackenbasiskörpern 14, 16 zusammenwirken und die Grundbacken 6, 8 aufeinanderzu oder voneinanderweg bewegen.

Die zueinander identisch ausgebildeten Grundbacken 6, 8 mit Führungsabschnitten und Eingriffsabschnitten sind als spritzgegossene Kunststoffteile hergestellt.

## Patentansprüche

1. Greifvorrichtung für die Handhabung von Gegenständen, mit einem Gehäuse (2) und wenigstens zwei gesteuert aufeinander zu- und voneinander wegbewegbaren Grundbacken (6,8), die über einen in Verschieberichtung erstreckten Führungsabschnitt (12, 13) in einer komplementär hierzu ausgebildeten Gehäuseausnehmung (10) geführt sind und die Greiferfinger bilden oder an denen die Greiferfinger befestigbar sind, **dadurch gekennzeichnet, dass** ein Führungsabschnitt (12, 13) wenigstens einer der Grundbacken (6, 8) eine Führung für einen Eingriffsabschnitt (18, 20) der anderen Grundbacke bildet.

2. Greifvorrichtung nach Anspruch 1, **dadurch gekennzeichnet, dass** jede Grundbacke (6, 8) einen Führungsabschnitt (12, 13) und einen Eingriffsabschnitt (18, 20) aufweist.

3. Greifvorrichtung nach Anspruch 2, **dadurch gekennzeichnet, dass** die Grundbacken (6, 8) identisch ausgebildet sind.

4. Greifvorrichtung nach Anspruch 2 oder 3, **dadurch gekennzeichnet, dass** der Führungsabschnitt (12, 13) bzw. der Eingriffsabschnitt (18, 20) jeder Grundbacke (6, 8) an einem Grundbackenbasiskörper (14, 16) in Verschieberichtung seitlich vorgesehen ist.

5. Greifvorrichtung nach Anspruch 4, **dadurch gekennzeichnet, dass** der Führungsabschnitt (12, 13) bzw. der Eingriffsabschnitt (18, 20) jeder Grundbacke (6, 8) den Grundbackenbasiskörper (14, 16) der anderen Grundbacke (6, 8) in Verschieberichtung seitlich umgreift.

6. Greifvorrichtung nach einem der vorstehenden Ansprüche 2 - 5, **dadurch gekennzeichnet, dass** ein Führungsabschnitt (12, 13) und ein Eingriffsabschnitt (18, 20) einer Grundbacke (6, 8) einander quer zur Verschieberichtung gegenüberliegen.

7. Greifvorrichtung nach einem der vorstehenden Ansprüche, **dadurch gekennzeichnet, dass** der Führungsabschnitt (12, 13) eine in Verschieberichtung erstreckte, nach innen offene nutförmige Ausnehmung (22, 24) aufweist, die in Verschieberichtung an ihrer vom Grundbackenbasiskörper (14, 16) abgewandten Stirnseite mündet und in welche der Eingriffsabschnitt (18, 20) der anderen Grundbacke (6, 8) eingreift.

8. Greifvorrichtung nach einem der vorstehenden Ansprüche, **dadurch gekennzeichnet, dass** der Führungsabschnitt (12, 13) im Bereich des Grundbackenbasiskörpers (14, 16) eine geschlossene Öffnung (25) umfasst, die von der nutförmigen Ausnehmung (22, 24) gebildet und vom Grundbackenbasiskörper (14, 16) begrenzt ist.

9. Greifvorrichtung nach einem der vorstehenden Ansprüche, **dadurch gekennzeichnet, dass** die Grundbacken (6, 8) aus Kunststoff gefertigt sind.

10. Greifvorrichtung nach Anspruch 9, **dadurch gekennzeichnet, dass** die Grundbacken (6, 8) im Spritzgußverfahren einstückig aus Kunststoff gefertigt sind.

## Claims

1. Gripping device for the handling of objects, having a housing (2) and at least two basic jaws (6, 8) moveable in controlled manner towards and away from each other, guided by means of a guide section (12, 13) extending in the displacement direction in a housing recess (10) designed to be complementary to it and comprise the gripper fingers or to which the gripper fingers are attachable, **characterised in that** a guide section (12, 13) of at least one of the basic jaws (6, 8) comprises a guide for an engagement section (18, 20) of the other basic jaw.

2. Gripping device according to Claim 1, **characterised in that** each basic jaw (6, 8) has a guide section (12, 13) and an engagement section (18, 20).

3. Gripping device according to Claim 2, **characterised in that** the basic jaws (6, 8) are identically designed.

4. Gripping device according to Claim 2 or 3, **characterised in that** the guide section (12, 13) or the engagement section (18, 20) of each basic jaw (6, 8) is provided laterally on a basic jaw base body (14, 16) in the displacement direction.

5. Gripping device according to Claim 4, **characterised in that** the guide section (12, 13) or the engagement section (18, 20) of each basic jaw (6, 8) laterally surrounds the basic jaw base body (14, 16) of the other basic jaw (6, 8) in the displacement direction.

6. Gripping device according to one of the previous claims 2 to 5, **characterised in that** a guide section (12, 13) and an engagement section (18, 20) of a basic jaw (6, 8) oppose each other transverse to the displacement direction.

7. Gripping device according to one of the previous claims, **characterised in that** the guide section (12, 13) has a groove-shaped recess (22, 24) open towards the inside and extending in the displacement direction, which opens in the displacement direction on its end face away from the basic jaw base body (14, 16) and in which the engagement section (18, 20) of the other basic jaw (6, 8) engages.

8. Gripping device according to one of the previous claims, **characterised in that** the guide section (12, 13) includes a closed opening (25) in the region of the basic jaw base body (14, 16), which is formed by the groove-shaped recess (22, 24) and is limited by the basic jaw base body (14, 16).

9. Gripping device according to one of the previous claims, **characterised in that** the basic jaws (6, 8) are made of plastics material.

10. Gripping device according to Claim 9, **characterised in that** the basic jaws (6, 8) are made in an injection moulding process as one piece from plastics material.

## Revendications

1. Dispositif de saisie pour la manipulation d'objets, comportant un boîtier (2) et au moins deux mâchoires de base (6, 8) commandées pour se rapprocher et s'éloigner l'une de l'autre, guidées au moyen d'une section de guidage (12, 13), qui s'étend selon une direction de coulissement et disposée dans un évidement du boîtier (10) conformé de manière complémentaire, et qui forment les doigts de saisie ou sur lesquelles on peut fixer des doigts de saisie, **caractérisé en ce qu'**une section de guidage (12, 13) d'au moins une mâchoire de base (6, 8) constitue un guidage pour une section de saisie (18, 20) de l'autre mâchoire de base (6, 8).

2. Dispositif de saisie selon la revendication 1, **caractérisé en ce que** chaque mâchoire de base (6, 8) comporte une section de guidage (12, 13) et une section de saisie (18, 20).

3. Dispositif de saisie selon la revendication 2, **caractérisé en ce que** les mâchoires de base (6, 8) sont conformées de manière identique.

4. Dispositif de saisie selon la revendication 2 ou 3, **caractérisé en ce que** la section de guidage (12, 13) ou la section de saisie (18, 20) de chaque mâchoire de base (6, 8) est prévue sur un corps de base de mâchoire (14, 16) sur le côté dans la direction de coulissement.

5. Dispositif de saisie selon la revendication 4, **caractérisé en ce que** la section de guidage (12, 13) ou la section de saisie (18, 20) de chaque mâchoire de base (6, 8) entoure le corps de base de mâchoire (14, 16) de l'autre mâchoire de base (6, 8) sur le côté dans la direction de coulissement.

6. Dispositif de saisie selon l'une quelconque des revendications précédentes, **caractérisé en ce qu'**une section de guidage (12, 13) et une section de saisie (18, 20) d'une mâchoire de base (6, 8) sont opposées l'une à l'autre dans une direction transversale par rapport à la direction de coulissement.

7. Dispositif de saisie selon l'une quelconque des revendications précédentes, **caractérisé en ce que** la section de guidage (12, 13) comporte un évidement (22, 24) qui est en forme d'encoche ouverte vers l'intérieur et s'étendant dans la direction de coulissement, qui débouche, dans la direction de coulissement, sur sa face frontale opposée au corps de base de mâchoire (14, 16) et dans lequel s'accroche la section de saisie (18, 20) de l'autre mâchoire de base (6, 8).

8. Dispositif de saisie selon l'une quelconque des revendications précédentes, **caractérisé en ce que** la section de guidage (12, 13) comprend, dans la zone du corps de base de mâchoire (14, 16), une ouverture fermée (25) qui est constituée par l'évidement en forme d'encoche (22, 24) et qui est limitée par le corps de base de mâchoire (14, 16).

9. Dispositif de saisie selon l'une quelconque des revendications précédentes, **caractérisé en ce que** les mâchoires de base (6, 8) sont réalisées en matière plastique.

10. Dispositif de saisie selon la revendication 9, **caractérisé en ce que** les mâchoires de base (6, 8) sont réalisées en une seule pièce en matière plastique par le procédé de moulage par injection.
